(19) Europäisches Patentamt
European Patent Office
Office européen des brevets

(11) **EP 4 488 884 A1**

(12) **EUROPEAN PATENT APPLICATION**

(43) Date of publication:
**08.01.2025 Bulletin 2025/02**

(21) Application number: **24179529.3**

(22) Date of filing: **03.06.2024**

(51) International Patent Classification (IPC):
**G06N 5/01** (2023.01)     **G06N 7/08** (2006.01)
**G06N 7/01** (2023.01)

(52) Cooperative Patent Classification (CPC):
**G06N 5/01; G06N 7/01; G06N 7/08**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **07.07.2023 JP 2023112457**

(71) Applicant: **Fujitsu Limited
Kawasaki-shi, Kanagawa 211-8588 (JP)**

(72) Inventors:
• **ISHIDA, Yuichi
Kawasaki-shi, Kanagawa, 211-8588 (JP)**
• **YONEOKA, Noboru
Kawasaki-shi, Kanagawa, 211-8588 (JP)**

(74) Representative: **Hoffmann Eitle
Patent- und Rechtsanwälte PartmbB
Arabellastraße 30
81925 München (DE)**

(54) **TEMPERATURE ADJUSTMENT PROGRAM, DATA PROCESSING APPARATUS, AND DATA PROCESSING METHOD**

(57)    A temperature adjustment program causes a computer to execute a process. The process includes acquiring an average value of values of an evaluation function obtained in search processing by a replica circuit in which a first temperature value higher than a minimum temperature value by n (n is an integer of 1 or more) is set, among a plurality of replica circuits in which a plurality of temperature values different from each other are set during the search processing a plurality of times from a search unit that performs the search processing of a solution to a combinatorial optimization problem by a replica exchange method by using the plurality of replica circuits that correspond to a plurality of replicas of the evaluation function based on an Ising model obtained by converting the combinatorial optimization problem; changing the first temperature value based on a comparison result between a first average value among the average values acquired the plurality of times and a second average value acquired before the first average value; newly determining the plurality of temperature values by, while fixing a maximum temperature value and the changed first temperature value among the plurality of temperature values, changing other temperature values that include the minimum temperature value based on the maximum temperature value and the changed first temperature value; and setting the plurality of determined temperature values for the search unit.

FIG. 1

# FIG. 3

| METHOD OF PRESENT EMBODIMENT | INITIAL VALUE OF $T_0$ | | MAIN $T_0$ AFTER ADJUSTMENT | MAIN $T_n$ AFTER ADJUSTMENT |
|---|---|---|---|---|
| METHOD OF COMPARATIVE EXAMPLE | INITIAL VALUE OF $T_0$ | OPTIMUM VALUE OF $T_0$ | | MAIN $T_0$ AFTER ADJUSTMENT |

TEMPERATURE

| SPECIFIC EXAMPLE OF NUMERICAL VALUE | 0.1 | 0.4 | 0.6 | 0.9 |
|---|---|---|---|---|

**Description**

FIELD

The embodiments discussed herein are related to a temperature adjustment program, a data processing apparatus, and a data processing method.

BACKGROUND

When searching for a solution to a combinatorial optimization problem, there is a method of converting the combinatorial optimization problem into an Ising model representing a behavior of a spin of a magnetic substance. The Ising model is represented by an Ising-type evaluation function for evaluating the solution to the combinatorial optimization problem. The Ising-type evaluation function includes a plurality of state variables and a plurality of weight values. A state of the Ising model is represented by values of the plurality of state variables. In the Ising-type evaluation function, a state variable is a binary variable having a value of 0 or 1 (or -1 or +1). The state variable may be denoted by a bit. The value of the Ising-type evaluation function may also be referred to as energy of the Ising model.

A Markov-chain Monte Carlo (MCMC) method is used in the search for a solution. Hereinafter, the search for the solution by the MCMC method is referred to as MCMC processing. For example, in the MCMC processing, a state transition is accepted with an acceptance probability of the state transition defined by a Metropolis method or a Gibbs method. At this time, the state transition that increases the value of the evaluation function is also stochastically permitted. As the increase amount of the value of the evaluation function is larger, the acceptance probability is lower.

As one type of the MCMC method, there is a replica exchange method (also referred to as a parallel tempering method or the like). According to the replica exchange method, the MCMC processing using a plurality of temperature values is performed independently of each other by a plurality of replicas of the evaluation function based on the Ising model. For each certain number of trials, the values of the evaluation function obtained in each MCMC processing are compared with each other, and states for the two temperature values are exchanged with an appropriate exchange probability. Compared with a simulated annealing method in which the temperature value is gradually decreased, the replica exchange method reduces a possibility of being constrained to a local solution and enables an efficient search of the entire solution space.

Heretofore, there has been a method in which a minimum temperature value (hereafter, may also be referred to as a minimum temperature) and a maximum temperature value (hereafter, may also be referred to as a maximum temperature) among a plurality of temperature values in the replica exchange method are determined from information on a resolution of a value of an evaluation function.

Japanese Laid-open Patent Publication No. 2022-94510 and Japanese Laid-open Patent Publication No. 2020-46718 are disclosed as related art.

SUMMARY

PROBLEMS

At the time of solving the combinatorial optimization problem by using the replica exchange method, in a case where a minimum temperature is not appropriately set, a time until a solution is obtained may be very long. For example, it is because, when the minimum temperature is too low, state transition accompanied by the increase in a value of an evaluation function hardly occurs, and once a local solution is obtained, there is a possibility that it may not be possible to escape from the local solution.

However, to determine an appropriate minimum temperature, a procedure of performing solution search processing by using a certain minimum temperature and adjusting the minimum temperature based on a result of the solution search processing is repeated. For this reason, there is a problem that it takes time to adjust the minimum temperature.

In one aspect, an object of the present disclosure is to provide a temperature adjustment program, a data processing apparatus, and a data processing method capable of shortening an adjustment time of a minimum temperature used in a replica exchange method.

According to an aspect of the embodiments, a temperature adjustment program causes a computer to execute a process. The process includes acquiring an average value of values of an evaluation function obtained in search processing by a replica circuit in which a first temperature value higher than a minimum temperature value by n (n is an integer of 1 or more) is set, among a plurality of replica circuits in which a plurality of temperature values different from each other are set during the search processing a plurality of times from a search unit that performs the search processing of a solution to a combinatorial optimization problem by a replica exchange method by using the plurality of replica circuits that correspond to a plurality of replicas of the evaluation function based on an Ising model obtained by converting the combinatorial optimization problem; changing the first temperature value based on a comparison result between a first average value among the average values acquired the plurality of times and a second average value acquired before the first average value; newly determining the plurality of temperature values by, while fixing a maximum temperature value and the changed first temperature value among the plurality of temperature values, changing other temperature values that include the minimum temperature value based on the maximum temperature value and the changed first temperature value; and setting the plurality of determined temperature values for the search unit.

[Effects of Invention]

In one aspect of the present disclosure, it is possible to shorten the adjustment time of the minimum temperature used in the replica exchange method.

BRIEF DESCRIPTION OF DRAWINGS

FIG. 1 is a diagram illustrating an example of a data processing apparatus according to a first embodiment;
FIG. 2 is a flowchart illustrating an example of a procedure for adjusting a temperature value;
FIG. 3 is a schematic diagram illustrating an example of adjustment of $T_0$;
FIG. 4 is a diagram illustrating an example of a data processing apparatus according to a second embodiment;
FIG. 5 is a diagram illustrating an example of a temperature adjustment unit;
FIG. 6 is a flowchart illustrating a flow of an example of a procedure for adjusting a temperature value according to the second embodiment;
FIG. 7 is a diagram illustrating an example of calculation results of a combinatorial optimization problem; and
FIG. 8 is a diagram illustrating an example of hardware of a computer that is an example of the data processing apparatus.

DESCRIPTION OF EMBODIMENTS

Hereinafter, embodiments of the present disclosure will be described with reference to the drawings.

(First Embodiment)

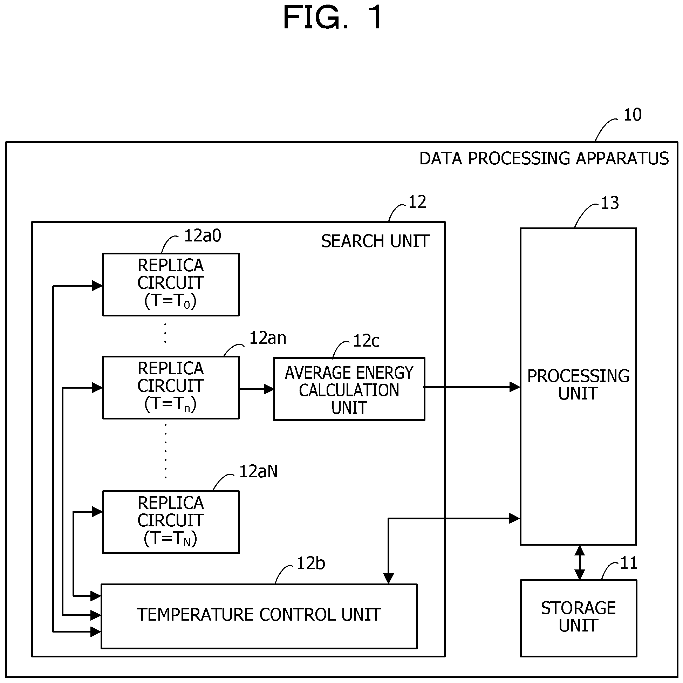

FIG. 1 is a diagram illustrating an example of a data processing apparatus according to a first embodiment.
A data processing apparatus 10 includes a storage unit 11, a search unit 12, and a processing unit 13.
For example, the storage unit 11 is a volatile storage apparatus that is an electronic circuit such as a dynamic random-access memory (DRAM) or a non-volatile storage apparatus that is an electronic circuit such as a hard disk drive (HDD) or a flash memory. The storage unit 11 may include an electronic circuit such as a static random-access memory (SRAM) register.
For example, the storage unit 11 stores information on a combinatorial optimization problem to be calculated, calculation conditions, and the like. Various programs such as a temperature adjustment program may be stored in the storage unit 11.
For example, the search unit 12 may be implemented by using an electronic circuit such as an application-specific integrated circuit (ASIC) or a field-programmable gate array (FPGA). The search unit 12 may be implemented by software processing in which a processor that is hardware such as a central processing unit (CPU), a graphics processing unit (GPU), or a digital signal processor (DSP) executes a program.
The search unit 12 uses replica circuits 12a0, ..., 12an, ..., and 12aN corresponding to (N + 1) replicas of an evaluation function based on an Ising model obtained by converting a combinatorial optimization problem to be calculated, and searches for a solution to the combinatorial optimization problem by a replica exchange method.
For example, the evaluation function based on the Ising model is defined by Expression (1) below.

$$E(\boldsymbol{x}) = -\sum_{\langle i,j \rangle} W_{ij} x_i x_j - \sum_{i=1}^{M} b_i x_i \qquad (1)$$

A first term on a right side is a sum obtained by adding up products of values of two state variables and a weight coefficient without missing and overlapping for all combinations of the two state variables selectable from all state variables included in the Ising model. $x_i$ is an i-th state variable. $x_j$ is a j-th state variable. $W_{ij}$ is a weight coefficient indicating a weight (for example, strength of coupling) between the i-th state variable and the j-th state variable. M is a total number of state variables.

A second term on the right side is a total sum of products of a bias coefficient of each of all the state variables and a value of the state variable. $b_i$ indicates a bias coefficient for the i-th state variable.

For example, "-1" of a spin in the Ising model corresponds to a value "0" of the state variable. "+1" of a spin in the Ising model corresponds to a value "1" of the state variable. Therefore, the state variable may also be referred to as a bit taking a value of 0 or 1.

A state when a minimum value among local minimum values of E(x) is obtained is an optimum solution. By changing a sign of each term on the right side of Expression (1), the search unit 12 may search for a state in which a value of E(x) is locally maximized (in this case, the state when the value of E(x) is the maximum value is the optimum solution). Hereinafter, the value of the evaluation function may also be referred to as energy.

Each of the replica circuits 12a0 to 12aN in which a plurality of temperature values different from each other are set repeats MCMC processing. For example, the MCMC processing includes processing of determining whether to permit a change of any bit of a plurality of bits, based on a comparison result between a change amount of the value of the evaluation function when a value of the bit is changed and a thermal noise value. The MCMC processing includes processing of causing, in a case where it is determined that the change in the value of a certain bit is permitted, a state transition by changing the value of the bit. Hereinafter, changing the value of the bit is referred to as a flip. The thermal noise value is obtained based on a temperature value and a random number value set for each of the replica circuits 12a0 to 12aN. As the temperature value increases, an amplitude of the thermal noise value increases.

The search unit 12 includes a temperature control unit 12b and an average energy calculation unit 12c.

The temperature control unit 12b sets (N + 1) temperature values different from each other, which are obtained by the processing unit 13, for the replica circuits 12a0 to 12aN.

In the example illustrated in FIG. 1, $T_0$ is set in the replica circuit 12a0, $T_n$ is set in the replica circuit 12an, and $T_N$ is set in the replica circuit 12aN as a temperature value (T). $T_0 < ... < T_n < ... < T_N$ holds. For example, $T_0$ is a minimum temperature, and $T_N$ is a maximum temperature. Hereinafter, a replica corresponding to the replica circuit 12a0 to which the minimum temperature is set is referred to as a minimum temperature replica.

The temperature control unit 12b controls replica exchange in replica circuits 21a0 to 21aN. Based on an exchange probability ($p_{ij}$) represented by Expression (2) below, the temperature control unit 12b determines whether to perform replica exchange for each pair of replica circuits having adjacent temperature values.

$$p_{ij} = \exp\left( (E_i - E_j)\left( \frac{1}{kT_i} - \frac{1}{kT_j} \right) \right) \qquad (2)$$

In Expression (2), $E_i$ is energy corresponding to a state of a replica (hereafter, referred to as a replica i) corresponding to an i-th replica circuit among the replica circuits 12a0 to 12aN. $E_j$ is energy corresponding to a state of a replica (hereafter, referred to as a replica j) corresponding to a j-th replica circuit. $T_i$ is a temperature value set for the i-th replica circuit. $T_j$ is a temperature value set for the j-th replica circuit. k is a Boltzmann constant. States of the replicas i and j are represented by M state variables $x_1$ to $x_M$.

With the probability of $p_{ij}$ described above, the temperature control unit 12b causes the state of the replica i and the state of the replica j to be exchanged.

Instead of exchanging the states between the replicas i and j, the temperature control unit 12b may exchange $T_i$ and $T_j$ with the probability of $p_{ij}$ described above.

The average energy calculation unit 12c calculates an average value (hereafter, referred to as average energy) of values of the above-described evaluation function (E(x)) obtained in the search processing by the replica circuit 12an in which the temperature value ($T_n$) higher than the minimum temperature by n is set. n is an integer equal to or greater than 1. Although not particularly limited, for example, n may be a value of about 10% of the number of replicas N + 1. An upper limit of $T_n$ is $T_{N-1}$. Accordingly, the upper limit of n is the number of replicas minus 2.

For example, the average energy calculation unit 12c updates average energy every time the replica circuit 12an flips any value of $x_1$ to $x_M$.

For example, the processing unit 13 may be implemented by software processing in which a processor that is hardware such as a CPU, a GPU, or a DSP executes a program such as the temperature adjustment program stored in the storage unit 11. The processing unit 13 may be implemented by using an electronic circuit such as an ASIC or an FPGA.

The processing unit 13 has a function of adjusting a plurality of temperature values that are different from each other used for solution search by the replica exchange method.

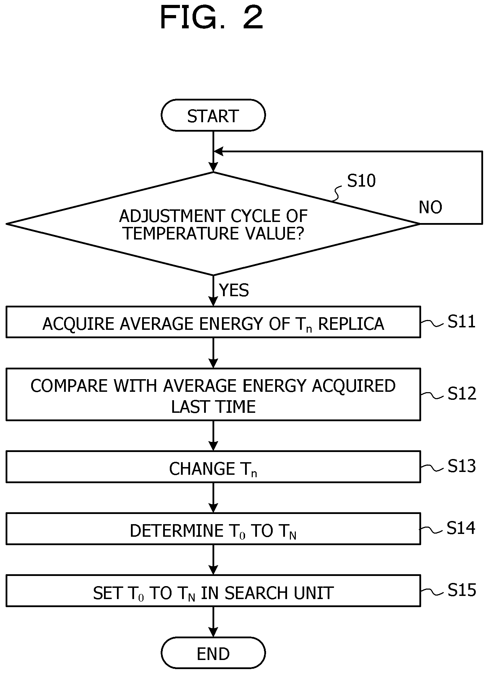

FIG. 2 is a flowchart illustrating an example of a procedure for adjusting a temperature value.

Step S10: The processing unit 13 determines whether it is an adjustment cycle of a temperature value. For example, the processing unit 13 determines that it is an adjustment cycle of a temperature value every time replica exchange is performed a predetermined number of times in the search unit 12. By increasing the number of times of replica exchange serving as the adjustment cycle, adjustment may be performed in consideration of a wider search space, but an adjustment frequency decreases. For this reason, the adjustment cycle may be appropriately set in accordance with a difficulty level of the combinatorial optimization problem to be calculated, or the like.

Every time the MCMC processing is performed a predetermined number of times in the search unit 12, the processing unit 13 may determine that it is the adjustment cycle of the temperature value.

When the processing unit 13 determines that it is the adjustment cycle of the temperature value, the processing unit 13 performs processing in step S11. When the processing unit 13 determines that it is not the adjustment cycle of the temperature value, the processing unit 13 repeats the processing in step S10.

Step S11: The processing unit 13 acquires average energy from the search unit 12. The processing unit 13 holds the acquired average energy.

Step S12: The processing unit 13 compares average energy acquired last time with the average energy acquired this time.

Step S13: Based on the comparison result obtained in the processing of step S12, the processing unit 13 changes $T_n$. For example, the processing unit 13 changes $T_n$ as follows.

First, for example, the processing unit 13 divides a range between an initial value of $T_n$ input from a user and a maximum temperature determined in advance by a predetermined division number, and calculates a plurality of candidate values of $T_n$ that have a plurality of steps of magnitude based on the division number. When the average energy acquired this time is equal to or smaller than the average energy acquired last time, the processing unit 13 changes $T_n$ to a candidate value larger than the current $T_n$ by one step. When the average energy acquired this time is larger than the average energy acquired last time, the processing unit 13 changes $T_n$ to a candidate value smaller than the current $T_n$ by one step.

Step S14: The processing unit 13 newly determines $T_0$ to $T_N$ by, while fixing a maximum temperature value ($T_N$) and the changed $T_n$ among $T_0$ to $T_N$, changing other temperature values that include $T_0$ based on $T_N$ and the changed $T_n$.

For example, to cause replica exchange to occur with the same frequency at any temperature value, a range between $T_0$ and $T_N$ may be divided by a ratio of an exponential function. In this case, a temperature value ($T_m$) other than $T_n$ and $T_N$ is given by Expression (3) below.

$$ T_m = T_0 \exp\left(\frac{\mathrm{m}}{\mathrm{N}} \log \frac{\mathrm{T_N}}{\mathrm{T_0}}\right) \quad (\mathrm{m} = 0, \cdots, \mathrm{N}) \tag{3} $$

In Expression (3), $T_0$ is given by Expression (4) below.

$$ T_0 = \exp\left[\frac{1}{\mathrm{N-n}}(\mathrm{N log T_n} - \mathrm{n log T_N})\right] \tag{4} $$

As in Expression (4), $T_0$ is changed in accordance with $T_N$ and $T_n$.

A method of dividing the range between $T_0$ and $T_N$ is not limited to the above-described example. When there is a more appropriate division method (for example, linear division or the like) from the problem information of the combinatorial optimization problem, the division method may be applied.

Step S15: The processing unit 13 sets the determined $T_0$ to $T_N$ for the search unit 12.

With the above, one-time adjustment processing of the temperature value ends. Such adjustment processing is repeated until an end condition of the solution search processing is satisfied.

As described above, in the data processing apparatus 10, the search unit 12 uses the replica circuits 12a0 to 12aN corresponding to a plurality of replicas of an evaluation function based on an Ising model obtained by converting a combinatorial optimization problem, and performs search processing for a solution to the combinatorial optimization problem by the replica exchange method. During the search processing, the processing unit 13 acquires, from the search unit 12, average energy obtained in the search processing by the replica circuit 12an, in which a temperature value ($T_n$) higher than $T_0$ by n (n is an integer of 1 or more) is set, among the replica circuits 12a0 to 12aN, a plurality of times. Based on a result of comparison between first average energy among average energies acquired the plurality of times and second average energy acquired before the first average energy, the processing unit 13 changes $T_n$. The processing unit 13 newly determines $T_0$ to $T_N$ by, while fixing the maximum temperature value ($T_N$) and the changed $T_n$ among $T_0$ to $T_N$, changing other temperature values that include $T_0$ based on $T_N$ and the changed $T_n$. The processing unit 13 sets the determined $T_0$ to $T_N$ for the search unit 12.

To determine an appropriate $T_0$, in a case where a procedure of performing solution search processing using a

certain $T_0$ and adjusting $T_0$ based on the result of the search processing is repeated, it takes time to adjust $T_0$. By contrast, in the data processing apparatus 10 according to the first embodiment, average energy to be used to determine new temperature values may be obtained during the solution search processing. For this reason, it is possible to determine new temperature values including $T_0$ during the solution search processing based on the average energy acquired a plurality of times. For example, since it is possible to adjust the temperature values including $T_0$ during the search processing without waiting for the end of the search processing, it is possible to shorten the adjustment time of $T_0$.

Constraint of a solution to a local solution by replica exchange is suppressed. Thus, by setting an adjustment cycle to a predetermined number of times of replica exchange, it is possible to appropriately adjust $T_0$ in consideration of a wide search space.

A reason why the temperature values including $T_0$ are adjusted based on the average energy obtained in the search processing by the replica circuit 12an in which $T_n$ is set will be described.

The manner in which the average energy of the minimum temperature replica changes with respect to $T_0$ is similar to that of the minimum energy. For this reason, there is a possibility that the adjustment of the optimum $T_0$ for obtaining smaller minimum energy may be performed based on the average energy of the minimum temperature replica. However, as a result of experiments, it has been found that, in the case of the method of adjusting $T_0$ based on the average energy of the minimum temperature replica, an initial value of $T_0$ takes a value closer to the optimum $T_0$ than $T_0$ after adjustment, depending on the combinatorial optimization problem.

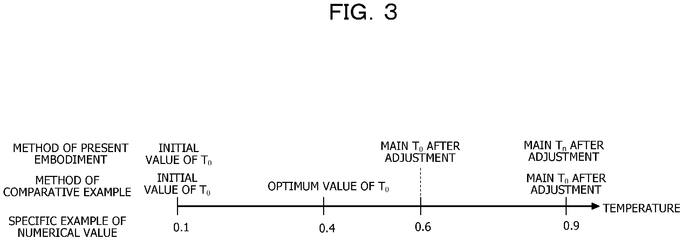

FIG. 3 is a schematic diagram illustrating an example of adjustment of $T_0$. FIG. 3 illustrates an adjustment example of $T_0$ by a method (hereafter, referred to as a method of a comparative example) in which adjustment of $T_0$ is performed based on average energy of a minimum temperature replica, together with an adjustment example of $T_0$ in the method of the present embodiment.

In the example illustrated in FIG. 3, an initial value of $T_0$ is 0.1 in both of the methods. An optimum value of $T_0$ is 0.4. According to the method of the comparative example, the main $T_0$ after adjustment is 0.9. By contrast, in the method according to the present embodiment, the main $T_n$ after adjustment is 0.9, and the main $T_0$ after adjustment is 0.6, and $T_0$ closer to the optimum value than that of the method of the comparative example is obtained.

As described above, even when $T_n$ is adjusted to a value higher than the optimum $T_0$, (n - 1) temperature values on the lower temperature side than $T_n$ are set in (n - 1) replica circuits, and search processing in the vicinity of the optimum $T_0$ is performed.

It may be expected that the data processing apparatus 10 as described above is useful as means for obtaining an accurate solution in a short period of time when solving various problems in modern society which may be converted into a combinatorial optimization problem.


(Second Embodiment)

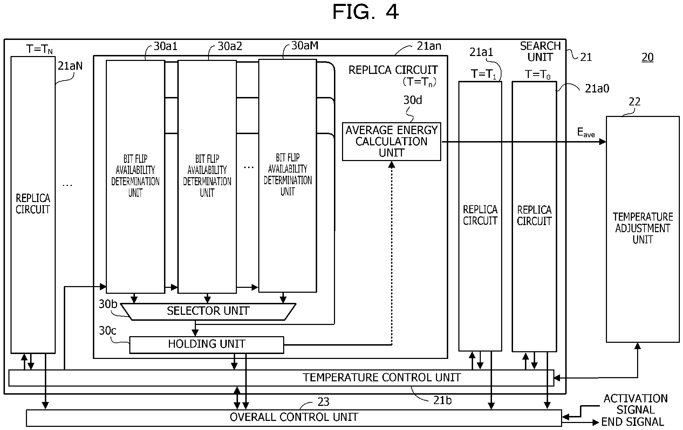

FIG. 4 is a diagram illustrating an example of a data processing apparatus according to a second embodiment.

A data processing apparatus 20 according to the second embodiment includes a search unit 21, a temperature adjustment unit 22, and an overall control unit 23. The search unit 21 is an example of the search unit 12 illustrated in FIG. 1, and the temperature adjustment unit 22 and the overall control unit 23 are an example of the processing unit 13 illustrated in FIG. 1. An element corresponding to the storage unit 11 illustrated in FIG. 1 is not illustrated.

For example, the search unit 21 may be implemented by using an electronic circuit such as an ASIC or an FPGA. For example, the temperature adjustment unit 22 and the overall control unit 23 may be implemented by software processing in which a processor such as a CPU executes a program. The implementation is not limited to this, and a part or entirety of each of the search unit 21, the temperature adjustment unit 22, and the overall control unit 23 may be implemented by using the electronic circuit as described above. A part or entirety of each of the search unit 21, the temperature adjustment unit 22, and the overall control unit 23 may be implemented by software processing.

In the data processing apparatus 20 according to the second embodiment, the search unit 21 searches for a solution to a combinatorial optimization problem by a replica exchange method in which states are exchanged between replicas.

For example, as illustrated in FIG. 4, the search unit 21 includes the replica circuits 21a0, 21a1, ..., 21an, ..., and 21aN corresponding to (N + 1) replicas. The search unit 21 includes a temperature control unit 21b.

Temperature values ($T_0$ to $T_N$) different from each other are set for the replica circuits 21a0 to 21aN. $T_0$ is set for the replica circuit 21a0, $T_1$ is set for the replica circuit 21a1, $T_n$ is set for the replica circuit 21an, and $T_N$ is set for the replica circuit 21aN. $T_0 < T_1 < ... < T_n < ... < T_N$ holds. For this reason, a replica corresponding to the replica circuit 21a0 is a minimum temperature replica. Hereinafter, a replica corresponding to the replica circuit 21an is referred to as a replica n.

As an initial value of $T_n$, for example, a value input by the user may be used.

$T_N$, which is a maximum temperature, is calculated in advance. For example, the temperature adjustment unit 22 of the data processing apparatus 20 may calculate $T_N$ in advance by the following method.

First, in a state where each temperature value from $T_0$ to $T_N$ is fixed, the search unit 21 performs the MCMC processing a predetermined number of times using replica exchange. The temperature adjustment unit 22 acquires a state (hereafter, referred to as a local solution) corresponding to minimum energy obtained in each of the replica circuits 21a0 to 21aN. From the plurality of acquired local solutions, the temperature adjustment unit 22 selects two local solutions in ascending order of energy, for example. The temperature adjustment unit 22 calculates a change amount ($\Delta E$) of a value of an evaluation function caused in a case where one value of a plurality of bits different from a bit string of another local solution among bit strings of one selected local solution is changed. This calculation processing is sequentially performed for each of the plurality of bits. In a case where an increase in energy occurs continuously a plurality of times, the temperature adjustment unit 22 calculates a total value of the energies increased in the plurality of times. Based on the total value, the temperature adjustment unit 22 calculates a maximum temperature ($T_{max}$) by, for example, Expression (5) below.

$$T_{max} = -\frac{Dsum}{\log(A)} \qquad (5)$$

As described above, in a case where an increase in energy occurs continuously a plurality of times, Dsum is a total value of energies increased in the plurality of times. A is a parameter indicating a transition probability of accepting a state transition that causes a maximum energy increase, and is set in advance.

Even in a case where there is a large peak of energy that may not be crossed unless a plurality of continuous energy increases occur between the two local solutions, the use of $T_{max}$ described above as $T_N$ allows crossing of such an energy peak with a relatively high probability.

Initial values of temperature values other than $T_n$ and $T_N$ may be obtained from Expressions (3) and (4) described above.

Each of the replica circuits 21a0 to 21aN implements the solution search based on the evaluation function represented by Expression (1) by, for example, a circuit as illustrated in FIG. 4.

The replica circuit 21an corresponding to the replica n includes bit flip availability determination units 30a1, 30a2, ..., and 30aM, a selector unit 30b, a holding unit 30c, and an average energy calculation unit 30d.

Processing of determining availability of flipping each bit included in the state of the replica n and flipping any bit determined to be flippable corresponds to one-time processing of the MCMC processing by the replica circuit 21an. The one-time processing is repeatedly executed.

Each of the bit flip availability determination units 30a1 to 30aM is, for example, an arithmetic processing circuit that determines availability of flipping related to one bit handled thereby. The bit flip availability determination units 30a1 to 30aM may perform the above-described determination processing in parallel.

When a value of a bit (state variable $x_i$) with index = i changes to $1 - x_i$, a change amount of $x_i$ is represented as $\delta x_i = (1 - x_i) - x_i = 1 - 2x_i$. Accordingly, a change amount ($\Delta E_i$) of the value of the evaluation function accompanied by the change in the value of $x_i$ may be represented by Expression (6) below from Expression (1).

$$\begin{aligned}
\Delta E_i &= E(\boldsymbol{x})\Big|_{x_i \to 1 - x_i} - E(\boldsymbol{x}) \\
&= -\delta x_i \left( \sum_j W_{ij} x_j + b_i \right) \\
&= -\delta x_i h_i \\
&= \begin{cases} -h_i & for \ x_i = 0 \to 1 \\ +h_i & for \ x_i = 1 \to 0 \end{cases}
\end{aligned} \qquad (6)$$

In Expression (6), $h_i$ is referred to as a local field and may be represented by Expression (7) below.

$$h_i = \sum_j W_{ij} x_j + b_i \qquad (7)$$

Each of the bit flip availability determination units 30a1 to 30aM holds $h_i$ for $x_i$, and obtains, from $h_i$, $\Delta E_i$ in a case

where the value of $x_i$ is changed, based on Expression (6).

Hereinafter, the bit flip availability determination unit 30a1 will be mainly described as an example. The bit flip availability determination units 30a2 to 30aM that are configurations with the same name have the same function.

The bit handled by the bit flip availability determination unit 30a1 is referred to as an own bit, and the bits handled by the bit flip availability determination units 30a2 to 30aM are referred to as other bits.

The bit flip availability determination unit 30a1 stores weight coefficients ($W_{1j}$ ($j$ = 1 to N)) between the own bit and the other bits. A subscript "j" of $W_{1j}$ indicates an index of one of the bits including the own bit (bit with index = 1). $W_{11}$ = 0.

The bit flip availability determination unit 30a1 uses $W_{1j}$ to calculate $h_1$ based on Expression (7).

By using $h_1$, the bit flip availability determination unit 30a1 generates $\Delta E_1$ caused in a case where the own bit is flipped, based on Expression (6). For example, the bit flip availability determination unit 30a1 may determine whether the value of the own bit changes to 0 or 1 from a current value of the own bit supplied from the holding unit 30c. The bit flip availability determination unit 30a1 outputs the generated $\Delta E_1$ to the selector unit 30b.

The bit flip availability determination unit 30a1 determines availability of flipping the own bit, based on a comparison result between $\Delta E_1$ and a thermal noise value. As the thermal noise value, for example, $T_n \cdot \log(u)$ may be used. $T_n$ is a temperature value set for the replica circuit 21an, and u is a uniform random number taking a value from 0 to 1. The bit flip availability determination unit 30a1 permits the flip when, for example, $-\Delta E_1 \geq T_n \cdot \log(u)$.

The selector unit 30b receives the determination result of the flip availability output by each of the bit flip availability determination units 30a1 to 30aM. When there are a plurality of bits determined to be flippable, the selector unit 30b selects one of the plurality of bits randomly or according to a predetermined rule. When there is a bit determined to be flippable, the selector unit 30b outputs an index of the selected bit, an instruction signal for instructing flipping, and the change amount ($\Delta E$) of the value of the evaluation function in a case where the bit is flipped. The index, the instruction signal, and $\Delta E$ are supplied to the holding unit 30c. The index is further supplied to each of the bit flip availability determination units 30a1 to 30aM.

For example, the holding unit 30c has a register and holds the state of the replica n and $\Delta E$ output by the selector unit 30b. In a case where the holding unit 30c receives an instruction signal for instructing flipping, the holding unit 30c flips the bit designated by the index output by the selector unit 30b. The holding unit 30c outputs the state of the replica n when the search processing in the replica circuit 21an is completed a predetermined number of times or for a predetermined period to the temperature adjustment unit 22 and the overall control unit 23.

The average energy calculation unit 30d calculates average energy ($E_{ave}$) of the replica n. $E_{ave}$ is supplied to the temperature adjustment unit 22. For example, the average energy calculation unit 30d holds an initial value of the evaluation function represented by Expression (1), and updates $E_{ave}$ by using $\Delta E$ output by the selector unit 30b and held by the holding unit 30c every time the MCMC processing is repeated. In a case where none of the bits are determined to be flippable, $\Delta E$ = 0.

Although the replica circuits corresponding to the other replicas may also be implemented by a circuit configuration similar to that of the replica circuit 21an, those replica circuits may not include the average energy calculation unit 30d.

The temperature control unit 21b sets $T_0$ to $T_N$ obtained by the temperature adjustment unit 22 in the bit flip availability determination units 30a1 to 30aM included in each of the replica circuits 21a0 to 21aN. The temperature control unit 21b controls the exchange of the states ($X_0$ to $X_N$) of each of the replicas in the replica circuits 21a0 to 21aN. Based on the exchange probability ($p_{ij}$) represented by Expression (2) described above, the temperature control unit 21b determines, on a pair-by-pair basis, whether to exchange states for a pair of replica circuits having adjacent temperature values.

To obtain $E_i$ and $E_j$ of Expression (2), the temperature control unit 21b holds, for example, an initial value of an evaluation function of each replica, and updates the value of the evaluation function of each replica based on $\Delta E$ held in the holding units 30c of the replica circuits 21a0 to 21aN. Each of the replica circuits 21a0 to 21aN may have an energy calculation unit that calculates an evaluation function (energy) of a replica for which the replica circuit itself is responsible for processing.

When exchanging the states of the replica i and the replica j, the temperature control unit 21b sets $X_i$, which is the state of the replica i, in the replica circuit corresponding to the replica j, and sets $X_j$, which is the state of the replica j, in the replica circuit corresponding to the replica i.

Every time replica exchange is performed b times, the temperature adjustment unit 22 acquires $E_{ave}$, which is the average energy of the replica n, and adjusts $T_n$ based on a comparison result between $E_{ave}$ and $e_{ave, old}$, which is $E_{ave}$ acquired last time. An example of the temperature adjustment unit 22 will be described later.

The overall control unit 23 controls overall operations of the data processing apparatus 20. Upon receiving input of an activation signal from an outside of the data processing apparatus 20, the overall control unit 23 outputs the activation signal to the temperature control unit 21b, activates the search unit 21, and starts search processing for a solution to a combinatorial optimization problem. When the search processing by the search unit 21 ends, the overall control unit 23 acquires $X_0$ to $X_M$ from the search unit 21 and obtains the solution for the combinatorial optimization problem.

For example, the overall control unit 23 sets, as a solution, a state in which the value of the evaluation function is the minimum among the acquired $X_0$ to $X_M$. The overall control unit 23 outputs an end signal indicating an end of the arithmetic operation to the outside of the data processing apparatus 20. The end signal may include information indicating the solution obtained by the arithmetic operation. For example, the overall control unit 23 may output image information indicating the solution to a display apparatus (not illustrated) coupled to the data processing apparatus 20 and causes the display apparatus to display the image information indicating the solution to present details of the obtained solution to the user.

The overall control unit 23 may receive problem information ($W_{ij}$ or $b_i$) described above stored in a storage unit (not illustrated), an initial value of the state, and the like, and may set them in each unit of the search unit 21. The setting of these pieces of information may be performed by another control unit. Upon receiving input of a reset signal from the outside of the data processing apparatus 20, the overall control unit 23 clears information held by the search unit 21 and the temperature adjustment unit 22.

(Example of Temperature Adjustment Unit 22)

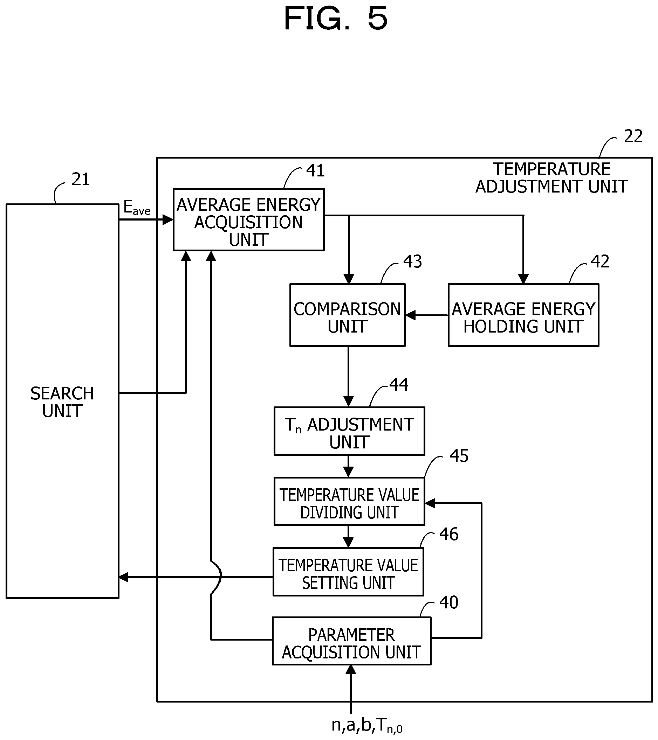

FIG. 5 is a diagram illustrating an example of a temperature adjustment unit. A configuration for calculating the maximum temperature described above is not illustrated in FIG. 5.

The temperature adjustment unit 22 includes a parameter acquisition unit 40, an average energy acquisition unit 41, an average energy holding unit 42, a comparison unit 43, a $T_n$ adjustment unit 44, a temperature value dividing unit 45, and a temperature value setting unit 46.

The parameter acquisition unit 40 acquires, for example, a number n of redundant replica circuits, a division number a, an adjustment cycle b, and an initial value ($T_{n, 0}$) of $T_n$ input from the user. The redundant replica circuits are n replica circuits in which temperature values of $T_0$ to $T_{(n-1)}$ on a lower temperature side than $T_n$ among $T_0$ to $T_N$ are set. The division number a is a division number, of the range between $T_{n, 0}$ and $T_N$ (= maximum temperature), for determining "a" candidate values of $T_n$. A lower limit of the "a" candidate values of $T_n$ is $T_{n, 0}$, and an upper limit is a candidate value of a division point that is one immediately below $T_N$. The adjustment cycle b is represented by the number of times of replica exchange. For example, every time the replica exchange is performed b times, adjustment of $T_n$ is performed.

Every time the replica exchange is performed b times, the average energy acquisition unit 41 acquires $E_{ave}$, which is average energy of the replica n. For example, the average energy acquisition unit 41 acquires information indicating whether the replica exchange has been performed from the temperature control unit 21b.

The average energy holding unit 42 holds $E_{ave}$ acquired by the average energy acquisition unit 41 as $e_{ave, old}$.

The comparison unit 43 outputs a comparison result between $E_{ave}$ acquired this time and $e_{ave, old}$, which is $E_{ave}$ acquired last time, held in the average energy holding unit 42.

Based on the above-described comparison result, the $T_n$ adjustment unit 44 adjusts $T_n$. At the time of initialization, the $T_n$ adjustment unit 44 divides the range between $T_{n, 0}$ and $T_N$ to calculate the "a" candidate values described above. When $E_{ave} \leq e_{ave, old}$, the $T_n$ adjustment unit 44 changes $T_n$ to a candidate value larger than the current $T_n$ by one step among the "a" candidate values. When $E_{ave} > e_{ave, old}$, the $T_n$ adjustment unit 44 changes $T_n$ to a candidate value smaller than the current $T_n$ by one step among the "a" candidate values.

However, when $E_{ave} \leq e_{ave, old}$, the $T_n$ adjustment unit 44 does not change $T_n$ in a case where the current $T_n$ is a candidate value closest to $T_N$ (maximum temperature), for example, the upper limit of the "a" candidate values. When $E_{ave} > e_{ave, old}$, the $T_n$ adjustment unit 44 does not change $T_n$ in a case where the current $T_n$ is $T_{n, 0}$, for example, the lower limit of the "a" candidate values.

According to the above-described adjustment method, adjustment may be performed with a small number of parameters, but the adjustment method is not limited to the above-described adjustment method. For example, after the $T_n$ adjustment unit 44 changes $T_n$ to the candidate value smaller than the current candidate value by one step, in a case where $E_{ave} > e_{ave, old}$ also holds for $E_{ave}$ acquired next, the $T_n$ adjustment unit 44 may change $T_n$ to a candidate value larger than the current candidate value by one step. This is because a state of lower energy may be obtained by increasing $T_n$.

The $T_n$ adjustment unit 44 may set the initial value of $T_n$ as the upper limit among the "a" candidate values.

When $T_n$ is changed, the temperature value dividing unit 45 determines $T_0$ to $T_N$ by dividing the range between $T_0$ and $T_N$ to include the maximum temperature value ($T_N$). The temperature value dividing unit 45 calculates (changes) temperature values other than $T_n$ and $T_N$ based on, for example, Expressions (3) and (4) described above.

The temperature value setting unit 46 sets the determined $T_0$ to $T_N$ in the search unit 21.

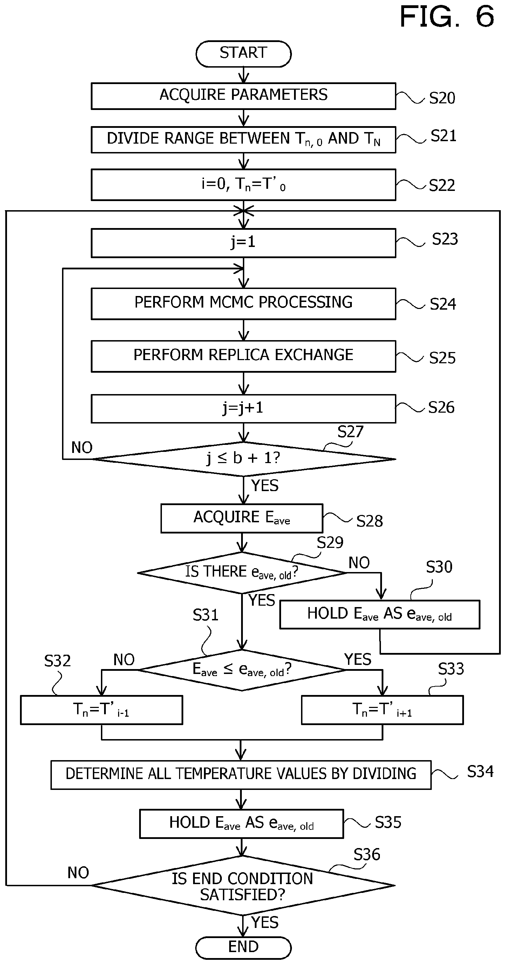

FIG. 6 is a flowchart illustrating a flow of an example of a procedure for adjusting a temperature value according to the second embodiment.

For example, the following processing is performed under the control of the overall control unit 23.

As parameters for adjusting the temperature value, the temperature adjustment unit 22 acquires the number n of redundant replica circuits, the division number a, the adjustment cycle b, and $T_{n, 0}$ (step S20).

At the time of initialization, the temperature adjustment unit 22 divides the range between $T_{n, 0}$ and $T_N$ to calculate the "a" candidate values described above (step S21). Hereinafter, the "a" candidate values are assumed to be $T'_0$, $T'_1$, ... ,

and $T'_{(a-1)}$.

The temperature adjustment unit 22 sets i = 0 and $T_n = T'_0$ (step S22). The temperature adjustment unit 22 initializes j indicating the number of times of replica exchange to j = 1 (step S23).

After that, the MCMC processing is performed in the search unit 21 (step S24). Accordingly, the state of each replica is updated in accordance with the acceptance probability of a predetermined state transition. Replica exchange is performed in the search unit 21 (step S25).

The temperature adjustment unit 22 sets j = j + 1 (step S26). The temperature adjustment unit 22 determines whether $j \leq b + 1$ holds (step S27). When it is determined that $j \leq b + 1$ does not hold, the processing from step S24 is repeated.

When it is determined that $j \leq b + 1$ holds, the temperature adjustment unit 22 acquires $E_{ave}$, which is the average energy of the replica n, from the search unit 21 (step S28).

The temperature adjustment unit 22 determines whether there is $e_{ave, old}$ in the average energy holding unit 42 (step S29).

When it is determined that there is no $e_{ave, old}$ in the average energy holding unit 42, the temperature adjustment unit 22 causes the average energy holding unit 42 to hold the currently acquired $E_{ave}$ as $e_{ave, old}$ (step S30). After the processing of step S30, processing from step S23 is repeated.

When it is determined that there is $e_{ave, old}$ in the average energy holding unit 42, the temperature adjustment unit 22 determines whether $E_{ave} \leq e_{ave, old}$ holds (step S31).

When it is determined that $E_{ave} \leq e_{ave, old}$ does not hold, the temperature adjustment unit 22 changes $T_n$ to $T_n = T'_{i-1}$ (step S32). $T'_{i-1}$ is a candidate value that is smaller than $T'_i$, which is the current candidate value, by one step among the "a" candidate values. When $T'_i = T_{n, 0}$, $T_n$ is not changed.

When it is determined that $E_{ave} \leq e_{ave, old}$ holds, the temperature adjustment unit 22 changes $T_n$ to $T_n = T'_{i+1}$ (step S33). $T'_{i+1}$ is a candidate value that is larger than $T'_i$, which is the current candidate value, by one step among the "a" candidate values. When $T'_i$ is the upper limit of the candidate values, $T_n$ is not changed.

After the processing of steps S32 and S33 described above, as described above, the temperature adjustment unit 22 determines $T_0$ to $T_N$ obtained by dividing the ranges between $T_0$ and $T_N$ (step S34). In the processing of step S34, the temperature adjustment unit 22 sets the determined $T_0$ to $T_N$ in the search unit 21.

The temperature adjustment unit 22 causes the average energy holding unit 42 to hold $E_{ave}$ acquired this time as $e_{ave, old}$ (step S35).

After that, for example, the overall control unit 23 determines whether a predetermined end condition is satisfied (step S36). For example, when the number of times of MCMC processing reaches a predetermined number of times, the overall control unit 23 determines that the end condition is satisfied. Although not illustrated, for example, in a case where it is determined that the end condition is satisfied, the overall control unit 23 acquires $X_0$ to $X_N$ from the search unit 21, outputs a state in which the value of the evaluation function is the minimum among $X_0$ to $X_N$ as a solution, and ends the search processing.

When the overall control unit 23 determines that the predetermined end condition is not satisfied, the processing from step S23 is repeated.

The order of the processing described above is an example, and the order may be appropriately changed.

The data processing apparatus 20 according to the second embodiment described above also provides similar effects to those of the data processing apparatus 10 according to the first embodiment. For example, by determining a new temperature value including the minimum temperature based on $E_{ave}$ acquired a plurality of times during the solution search processing, it is possible to shorten the adjustment time of the minimum temperature. The constraint of the solution to the local solution by the replica exchange is suppressed. Thus, by setting the adjustment cycle to the predetermined number of times of replica exchange, it is possible to appropriately adjust the minimum temperature in consideration of a wide search space.

The data processing apparatus 20 according to the second embodiment adjusts $T_n$ based on $E_{ave}$ obtained in the search processing by the replica circuit 21an in which $T_n$ is set, and determines temperature values including $T_0$ based on the adjustment result. Accordingly, even when $T_n$ is adjusted to a value higher than the optimum minimum temperature, (n - 1) temperature values on the lower temperature side than $T_n$ are set in (n - 1) replica circuits, and search processing in the vicinity of the optimum minimum temperature may be performed.

Although the search unit 21 exchanges states between replicas in the replica exchange in the data processing apparatus 20 according to the second embodiment described above, temperature values may be exchanged between the replicas. In this case, the temperature values set for the replica circuits 21a0 to 21aN corresponding to the replicas 0 to N are not fixed. For this reason, the replica circuit that performs the processing of the replica n is not fixed to the replica circuit 21an. Accordingly, the average energy calculation unit 30d, that calculates the average energy ($E_{ave}$) of the replica n, may be provided in the temperature control unit 21b instead of the replica circuits 21a0 to 21aN.

By exchanging temperature values instead of exchanging states between replicas, an amount of data to be moved at the time of replica exchange may be reduced.

Even in a case where states are exchanged between replicas in the replica exchange, the average energy calculation unit 30d as described above may be provided in the temperature control unit 21b. The average energy calculation unit 30d may be provided in the overall control unit 23, or may be provided independently of the replica circuits 21a0 to 21aN, the temperature control unit 21b, the overall control unit 23, and the like.

(Experimental Example)

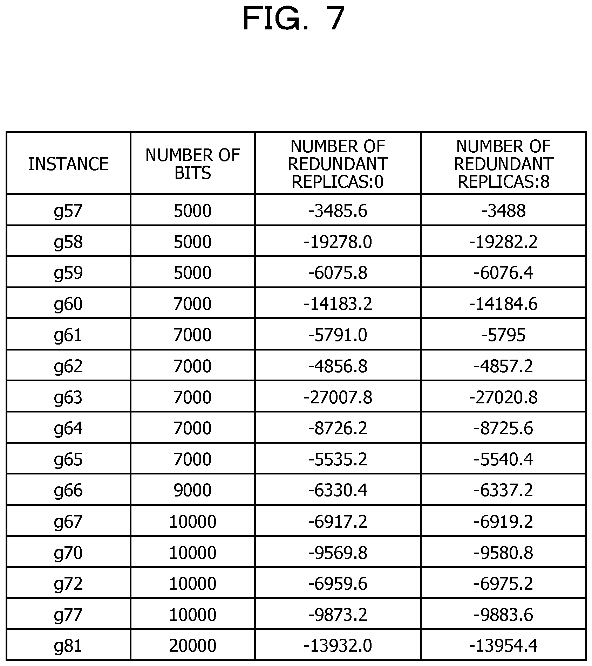

FIG. 7 is a diagram illustrating an example of calculation results of a combinatorial optimization problem.

FIG. 7 illustrates a calculation example of an average value of five seeds of minimum values of the evaluation function obtained in a case where 15 instances of Gset, which is a benchmark problem of a maximum cut problem, are calculated by the data processing apparatus 20 illustrated in FIG. 4. The maximum cut problem is an example of the combinatorial optimization problem. The calculation time is 30 minutes. The number of bits is the number of state variables $x_1$ to $x_M$ included in the evaluation function. The number n of redundant replicas is set to 8. For comparison, a calculation result in a case where the number of redundant replicas n = 0, for example, the minimum temperature is adjusted by using the average energy of the minimum temperature replica as in the comparative example described above is also indicated.

As illustrated in FIG. 7, the average value of the minimum values of the evaluation function is smaller in 14 problems of 15 problems than in the case where n = 0. For example, it may be seen that a better solution (a solution close to the optimum solution) than the case of n = 0 is obtained.

(Example of Implementation by Computer)

Details of the above-described processing (for example, FIG. 2 or 6) performed by the data processing apparatus 10 or 20 illustrated in FIG. 1 or 4 may be implemented by software by causing a computer as described below to execute a program.

The program may be recorded on a computer-readable recording medium. As the recording medium, for example, a magnetic disk, an optical disk, a magneto-optical disk, a semiconductor memory, or the like may be used. Examples of the magnetic disk include a flexible disk (FD) and an HDD. Examples of the optical disk include a compact disc (CD), a CD-recordable (R)/rewritable (RW), a Digital Versatile Disc (DVD), and a DVD-R/RW. The program may be recorded on a portable-type recording medium and distributed. In such a case, the program may be copied from the portable-type recording medium to another recording medium and executed.

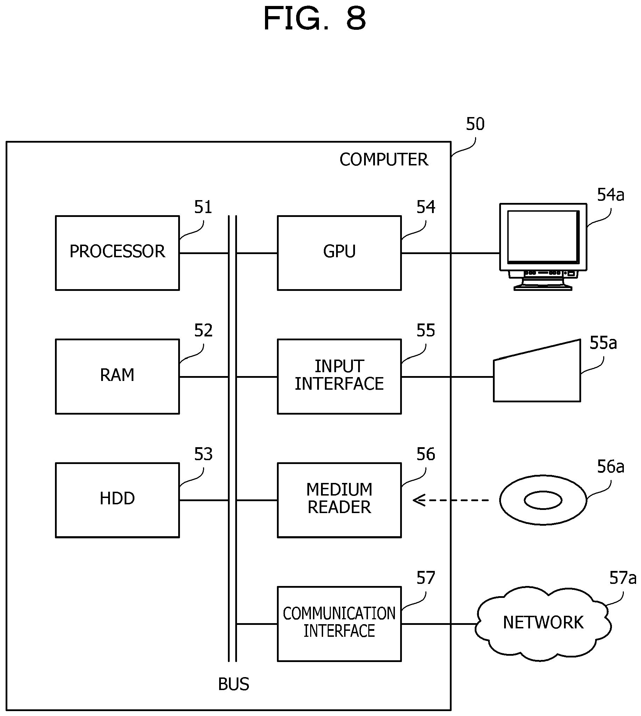

FIG. 8 is a diagram illustrating an example of hardware of a computer that is an example of the data processing apparatus.

A computer 50 includes a processor 51, a RAM 52, an HDD 53, a GPU 54, an input interface 55, a medium reader 56, and a communication interface 57. The units described above are coupled to a bus.

For example, the processor 51 may function as the search unit 12 and the processing unit 13 in FIG. 1, and as the search unit 21, the temperature adjustment unit 22, and the overall control unit 23 in FIG. 4. The processor 51 is a processor such as a GPU or a CPU including an arithmetic circuit for executing instructions of a program and a storage circuit such as a cache memory. The processor 51 loads at least a part of a program and data stored in the HDD 53 into the RAM 52 and executes the program. For example, to execute the functions of the replica circuits 21a0 to 21aN in parallel as illustrated in FIG. 4, the processor 51 may include a plurality of processor cores. The computer 50 may include a plurality of processors. A set of the plurality of processors (multiprocessor) may be referred to as a "processor".

For example, the RAM 52 functions as the storage unit 11 illustrated in FIG. 1. The RAM 52 is a volatile semiconductor memory that temporarily stores the program to be executed by the processor 51 and data to be used for the arithmetic operation by the processor 51. The computer 50 may include a type of memory other than the RAM 52 and may include a plurality of memories.

The HDD 53 is a non-volatile storage apparatus that stores a software program such as an operating system (OS), middleware, or application software, and data. Examples of the program include a program for causing the computer 50 to execute the processing of searching for the solution to the combinatorial optimization problem and the adjustment processing of the temperature value as described above. The computer 50 may include another type of a storage apparatus such as a flash memory or a solid-state drive (SSD) and may include a plurality of non-volatile storage apparatuses.

According to an instruction from the processor 51, the GPU 54 outputs an image (for example, an image representing a search result or the like of the solution to the combinatorial optimization problem) to a display 54a coupled to the computer 50. As the display 54a, a cathode ray tube (CRT) display, a liquid crystal display (LCD), a plasma display panel (PDP), an organic electro-luminescence (OEL) display, or the like may be used.

The input interface 55 acquires an input signal from an input device 55a coupled to the computer 50 and outputs the input signal to the processor 51. As the input device 55a, a pointing device such as a mouse, a touch panel, a touch pad, or a trackball, a keyboard, a remote controller, a button switch, or the like may be used. A plurality of types of input devices may be coupled to the computer 50.

The medium reader 56 is a reading apparatus that reads a program or data recorded on a recording medium 56a. As the recording medium 56a, for example, a magnetic disk, an optical disk, a magneto-optical (MO) disk, a semiconductor memory, or the like may be used. Examples of the magnetic disk include an FD and an HDD. Examples of the optical disk include a CD and a DVD.

For example, the medium reader 56 copies a program or data read from the recording medium 56a to another recording medium such as the RAM 52 or the HDD 53. For example, the read program is executed by the processor 51. The recording medium 56a may be a portable-type recording medium and may be used to distribute the program or data. The recording medium 56a or the HDD 53 may be referred to as a computer-readable recording medium.

The communication interface 57 is an interface that is coupled to a network 57a and communicates with another information processing apparatus via the network 57a. The communication interface 57 may be a wired communication interface coupled to a communication apparatus such as a switch via a cable or may be a wireless communication interface coupled to a base station via a wireless link.

An accelerator card having an electronic circuit such as an FPGA or an ASIC may be coupled to the bus of the computer 50. The processing of the search units 12 and 21 may be executed by the accelerator card.

Although aspects of the temperature adjustment program, the data processing apparatus, and the data processing method of the present disclosure have been described above based on the embodiments, these are merely examples and the present disclosure is not limited to the above description.

**Claims**

1.    A temperature adjustment program for causing a computer to execute a process, the process comprising:

acquiring an average value of values of an evaluation function obtained in search processing by a replica circuit in which a first temperature value higher than a minimum temperature value by n (n is an integer of 1 or more) is set, among a plurality of replica circuits in which a plurality of temperature values different from each other are set during the search processing a plurality of times from a search unit that performs the search processing of a solution to a combinatorial optimization problem by a replica exchange method by using the plurality of replica circuits that correspond to a plurality of replicas of the evaluation function based on an Ising model obtained by converting the combinatorial optimization problem;
changing the first temperature value based on a comparison result between a first average value among the average values acquired the plurality of times and a second average value acquired before the first average value;
newly determining the plurality of temperature values by, while fixing a maximum temperature value and the changed first temperature value among the plurality of temperature values, changing other temperature values that include the minimum temperature value based on the maximum temperature value and the changed first temperature value; and
setting the plurality of determined temperature values for the search unit.

2.    The temperature adjustment program according to claim 1, further causing the computer to execute a process of: acquiring the average value from the search unit, changing the first temperature value, newly determining the plurality of temperature values, and setting the plurality of temperature values for the search unit every time replica exchange is performed a predetermined number of times during the search processing.

3.    The temperature adjustment program according to claim 1, further causing the computer to execute a process of: dividing a range between an initial value of the first temperature value and the maximum temperature value by a predetermined division number, and calculating a plurality of candidate values of the first temperature value that have a plurality of steps of magnitude based on the division number.

4.    The temperature adjustment program according to claim 3, further causing the computer to execute a process of:

changing, when the first average value is equal to or smaller than the second average value, the first temperature value to a candidate value that is larger than a current first temperature value by one step among the plurality of candidate values; and
changing, when the first average value is larger than the second average value, the first temperature value to a candidate value that is smaller than the current first temperature value by one step among the plurality of candidate values.

5. A data processing apparatus comprising:

a search unit configured to perform a search processing of a solution to a combinatorial optimization problem by a replica exchange method by using a plurality of replica circuits that correspond to a plurality of replicas of the evaluation function based on an Ising model obtained by converting the combinatorial optimization problem; and a processing unit configured to:

acquire an average value of values of an evaluation function obtained in the search processing by a replica circuit in which a first temperature value higher than a minimum temperature value by n (n is an integer of 1 or more) is set, among the plurality of replica circuits in which a plurality of temperature values different from each other are set during the search processing a plurality of times from the search unit; change the first temperature value based on a comparison result between a first average value among the average values acquired the plurality of times and a second average value acquired before the first average value; newly determine the plurality of temperature values by, while fixing a maximum temperature value and the changed first temperature value among the plurality of temperature values, changing other temperature values that include the minimum temperature value based on the maximum temperature value and the changed first temperature value; and set the plurality of determined temperature values for the search unit.

6. A temperature adjustment method comprising:

acquiring an average value of values of an evaluation function obtained in search processing by a replica circuit in which a first temperature value higher than a minimum temperature value by n (n is an integer of 1 or more) is set, among a plurality of replica circuits in which a plurality of temperature values different from each other are set during the search processing a plurality of times from a search unit that performs the search processing of a solution to a combinatorial optimization problem by a replica exchange method by using the plurality of replica circuits that correspond to a plurality of replicas of the evaluation function based on an Ising model obtained by converting the combinatorial optimization problem; changing the first temperature value based on a comparison result between a first average value among the average values acquired the plurality of times and a second average value acquired before the first average value; newly determining the plurality of temperature values by, while fixing a maximum temperature value and the changed first temperature value among the plurality of temperature values, changing other temperature values that include the minimum temperature value based on the maximum temperature value and the changed first temperature value; and setting the plurality of determined temperature values for the search unit.

# FIG. 1

DATA PROCESSING APPARATUS — 10

SEARCH UNIT — 12

REPLICA CIRCUIT $(T=T_0)$ — 12a0

REPLICA CIRCUIT $(T=T_n)$ — 12an

REPLICA CIRCUIT $(T=T_N)$ — 12aN

AVERAGE ENERGY CALCULATION UNIT — 12c

TEMPERATURE CONTROL UNIT — 12b

PROCESSING UNIT — 13

STORAGE UNIT — 11

# FIG. 2

START

S10

ADJUSTMENT CYCLE OF
TEMPERATURE VALUE?

NO

YES

ACQUIRE AVERAGE ENERGY OF $T_n$ REPLICA — S11

COMPARE WITH AVERAGE ENERGY ACQUIRED
LAST TIME — S12

CHANGE $T_n$ — S13

DETERMINE $T_0$ TO $T_N$ — S14

SET $T_0$ TO $T_N$ IN SEARCH UNIT — S15

END

FIG. 3

| | | | | |
|---|---|---|---|---|
| METHOD OF PRESENT EMBODIMENT | INITIAL VALUE OF $T_0$ | | MAIN $T_0$ AFTER ADJUSTMENT | MAIN $T_n$ AFTER ADJUSTMENT |
| METHOD OF COMPARATIVE EXAMPLE | INITIAL VALUE OF $T_0$ | OPTIMUM VALUE OF $T_0$ | | MAIN $T_0$ AFTER ADJUSTMENT |
| SPECIFIC EXAMPLE OF NUMERICAL VALUE | 0.1 | 0.4 | 0.6 | 0.9 |

TEMPERATURE

FIG. 4

# FIG. 5

## FIG. 6

```
                    ┌─────────────┐
                    │    START    │
                    └─────────────┘
                           │
          ┌────────────────────────────────────┐
          │        ACQUIRE PARAMETERS          │───S20
          └────────────────────────────────────┘
                           │
          ┌────────────────────────────────────┐
          │ DIVIDE RANGE BETWEEN Tn, 0 AND TN  │───S21
          └────────────────────────────────────┘
                           │
          ┌────────────────────────────────────┐
          │          i=0, Tn=T'0               │───S22
          └────────────────────────────────────┘
                           │
          ┌────────────────────────────────────┐
          │              j=1                   │───S23
          └────────────────────────────────────┘
                           │
          ┌────────────────────────────────────┐
          │      PERFORM MCMC PROCESSING       │───S24
          └────────────────────────────────────┘
                           │
          ┌────────────────────────────────────┐
          │     PERFORM REPLICA EXCHANGE       │───S25
          └────────────────────────────────────┘
                           │
          ┌────────────────────────────────────┐
          │             j=j+1                  │───S26
          └────────────────────────────────────┘
                           │
    NO              ◇─────────────────◇  S27
   ◄────────────────┤   j ≤ b + 1?    │
                    ◇─────────────────◇
                           │ YES
          ┌────────────────────────────────────┐
          │          ACQUIRE Eave              │───S28
          └────────────────────────────────────┘
                           │
                    ◇─────────────────◇  S29      NO
                    │ IS THERE eave, old? ├──────────────┐   S30
                    ◇─────────────────◇               │
                           │ YES                       ▼
             S31                          ┌────────────────────────────┐
                    ◇─────────────────◇   │   HOLD Eave AS eave, old   │
   S32   NO         │ Eave ≤ eave, old? │  YES          └────────────────────────────┘
  ┌──────────────┐  ◇─────────────────◇   S33
  │  Tn=T'i-1    │                  │      ┌──────────────┐
  └──────────────┘                         │   Tn=T'i+1   │
                                           └──────────────┘
                           │
          ┌────────────────────────────────────┐
          │ DETERMINE ALL TEMPERATURE VALUES BY DIVIDING │───S34
          └────────────────────────────────────┘
                           │
          ┌────────────────────────────────────┐
          │     HOLD Eave AS eave, old         │───S35
          └────────────────────────────────────┘
                           │
    NO              ◇─────────────────◇  S36
   ◄────────────────┤   IS END CONDITION  │
                    │     SATISFIED?      │
                    ◇─────────────────◇
                           │ YES
                    ┌─────────────┐
                    │     END     │
                    └─────────────┘
```

# FIG. 7

| INSTANCE | NUMBER OF BITS | NUMBER OF REDUNDANT REPLICAS:0 | NUMBER OF REDUNDANT REPLICAS:8 |
|---|---|---|---|
| g57 | 5000 | -3485.6 | -3488 |
| g58 | 5000 | -19278.0 | -19282.2 |
| g59 | 5000 | -6075.8 | -6076.4 |
| g60 | 7000 | -14183.2 | -14184.6 |
| g61 | 7000 | -5791.0 | -5795 |
| g62 | 7000 | -4856.8 | -4857.2 |
| g63 | 7000 | -27007.8 | -27020.8 |
| g64 | 7000 | -8726.2 | -8725.6 |
| g65 | 7000 | -5535.2 | -5540.4 |
| g66 | 9000 | -6330.4 | -6337.2 |
| g67 | 10000 | -6917.2 | -6919.2 |
| g70 | 10000 | -9569.8 | -9580.8 |
| g72 | 10000 | -6959.6 | -6975.2 |
| g77 | 10000 | -9873.2 | -9883.6 |
| g81 | 20000 | -13932.0 | -13954.4 |

# FIG. 8

```
                                              50
                                               COMPUTER

   51                              54              54a
 PROCESSOR                 GPU              [MONITOR]


   52                              55              55a
    RAM                 INPUT
                      INTERFACE


   53                              56              56a
    HDD                 MEDIUM          <-----  (  )
                       READER


                                   57              57a
                   COMMUNICATION            NETWORK
                     INTERFACE

        BUS
```

**EUROPEAN SEARCH REPORT**

Application Number

EP 24 17 9529

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LIU YANG ET AL: "Optimization of replica exchange temperature ladder under the well-tempered ensemble", CHEMICAL PHYSICS LETTERS, vol. 711, 1 November 2018 (2018-11-01), pages 66-72, XP093226961, NL ISSN: 0009-2614, DOI: 10.1016/j.cplett.2018.09.036 * page 1 - page 3 * | 1-6 | INV. G06N5/01 G06N7/08 G06N7/01 |
| A | US 2022/188678 A1 (KUSHIBE DAISUKE [JP] ET AL) 16 June 2022 (2022-06-16) * paragraph [0003]; figure 1 * | 1-6 | |

TECHNICAL FIELDS SEARCHED (IPC)

G06N

The present search report has been drawn up for all claims

| Place of search | Date of completion of the search | Examiner |
|---|---|---|
| The Hague | 3 December 2024 | Falco, Gabriele |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 9529

This annex lists the patent family members relating to the patent documents cited in the above-mentioned European search report.
The members are as contained in the European Patent Office EDP file on
The European Patent Office is in no way liable for these particulars which are merely given for the purpose of information.

03-12-2024

| Patent document cited in search report | Publication date | Patent family member(s) | Publication date |
|---|---|---|---|
| US 2022188678 A1 | 16-06-2022 | JP 7553802 B2 | 19-09-2024 |
| | | JP 2022094510 A | 27-06-2022 |
| | | US 2022188678 A1 | 16-06-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022094510 A

- JP 2020046718 A